Europäisches Patentamt

European Patent Office

Office européen des brevets

(11) Publication number: **0 358 301**
**A2**

# EUROPEAN PATENT APPLICATION

(21) Application number: 89304942.9

(51) Int. Cl.5: **G06F 15/02**

(22) Date of filing: 15.05.89

(30) Priority: 16.05.88 JP 120111/88

(43) Date of publication of application:
14.03.90 Bulletin 90/11

(84) Designated Contracting States:
DE GB

(71) Applicant: SHARP KABUSHIKI KAISHA
22-22 Nagaike-cho Abeno-ku
Osaka 545(JP)

(72) Inventor: Inoue, Fimihiro
26-501, Heijyo-dai-2-danchi 2-3, Ukyo
Nara-shi Nara-ken(JP)
Inventor: Tsubouchi, Kouichi
1-21-503, Tsurumai-nishimachi
Nara-shi Nara-ken(JP)

(74) Representative: Hitchcock, Esmond Antony et
al
Lloyd Wise, Tregear & Co. Norman House
105-109 Strand
London WC2R 0AE(GB)

(54) Calendar display device with pictorial symbols.

(57) A device for displaying a calendar with a picto-
rial symbol comprises a keyboard for inputting or
designating a date, schedule, pictorial symbol, calendar display or the like; a processor for making a
calendar by calculating in which a succession of
days including the day are arranged on a basis of
seven days when a date and a calendar display are
designated by the keyboard; a memory for storing a
pictorial symbol having a specified meaning, a
schedule on a basis of a day inputted by the key-
board and the calendar made by the processor; and
a display for displaying a schedule, calendar or the
like; the memory storing a specified date and a
specified pictorial symbol designated by the key-
board relatively to each other, and the display in-
cluding a device for displaying the specified pictorial
symbol near the specified date in the calendar.

## Calendar Display Device with Pictorial Symbols

The present invention relates to a calendar display device which is capable of electronically storing a schedule and, more specifically, to a calendar display device employed in a schedule storing device such as a portable electronic computer capable of displaying a schedule.

Such a schedule storing device is disclosed in Japanese Patent Laid-Open No. 127964/1987, No. 127965/1987 and No. 143169/1987.

In a calendar display device employed in such a schedule storing device, a displayed calendar has a public holiday and a scheduled date of some event which are circled or reversely imaged so that user can easily distinguish such days from others.

However, circling and reverse imaging are insufficient for the user to learn what such marking means; that is, the user can understand that the day marks a public holiday or a scheduled date of some event but not what holiday and what event.

For user's convenience, explanation of the marked date may be displayed with letters at the side of the date figure in the calendar. However, enough space is unavailable to put letters on, so that the displayed letters should be too small to read.

Accordingly, it is an object of the present invention to provide a device for displaying a calendar with pictorial symbols in which a displayed calendar has a public holiday or a scheduled date of some event marked with pictorial symbols put at the side of the date figure for symbolizing specific meaning.

In order to attain the object of the present invention, provided is a device for displaying a calendar with a pictorial symbol, comprising; input means for inputting or designating a date, schedule, pictorial symbol, calendar display or the like; calculating means for making a calendar by calculating in which a succession of days including the day are arranged on a basis of seven days when a date and a calendar display are designated by the input means; memory means for storing a pictorial symbol having a specified meaning, a schedule on a basis of a day inputted by the input means and the calendar made by the calculating means; and display means for displaying a schedule, calendar or the like; the memory means storing a specified date and a specified pictorial symbol designated by the input means relatively to each other, and the display means including a device for displaying the specified pictorial symbol near the specified date in the calendar.

In the above device, preferably, the calculating means further includes timer means for counting a date and a time and it makes a calendar in which days corresponding to a month and including the day of the present point just counted by the timer means are arranged on a basis of seven days when an instruction to display the calendar is applied through the input means.

Further preferably, the input means has the number of keys equivalent to the number of the pictorial symbol.

Still preferably, the display means simultaneously displays the schedule and the calendar.

According to the present invention, various input devices such as a keyboard device, a membrane switching device, a touch panel device, a tablet device and a pointing device may be used as input means for inputting data on a date, a schedule, a pictorial symbol, a calendar and the like and for specifying a display thereof.

Display means may display a calendar of at least a week, or preferably of a month with an appropriate space provided between date figures so that pictorial symbols explained later can be displayed at the side of those date figures and may also display a schedule of the period corresponding to the calendar. Preferably, the calendar and the corresponding schedule are concomitantly displayed. Although various indication devices and display devices can be used as the display means, a CRT display device, an LC (liquid crystal) display device, an EL (electroluminescence) display device or the like is applicable which enables users to instantaneously confirm the calendar and the schedule.

Calculation means may calculate to produce a calendar in which a succession of days, for example, days corresponding to a month, are arranged on a basis of seven days (i.e., a period from Sunday to Saturday, or from Monday to Sunday) by a known method of calculating a day of the week and a method of calculating a leap year. Mainly used as the calculation means are a ROM to which a calculation program is stored to obtain a day of the week of a specified day and the days before and after the specified day and obtain a leap year, and a processor for implementing the program. Preferably, the calculation means includes a clock for counting a date and a time so as to calculate and produce a calendar in which days corresponding to a month are arranged on a basis of seven days with the day of the present point of time just counted by the clock being included.

Memory means may store various pictorial symbols made in advance, a schedule on a basis of a day, a calendar and the like and may further store a specified date and a specified pictorial symbol designated by the input means relatively to each other. As the memory means, used properly as required are a known memory such as an internal memory (e.g., a ROM or a RAM) and an external storage medium (e.g., a floppy disc device or a magnetic disc device) and a processor. The pictorial symbol may be stored to an internal memory such as a ROM as a ready-made pictorial symbol pattern, or may be stored to an external storage medium such as a floppy disc as a pictorial symbol pattern made by users.

An embodiment of the invention will now be described by way of example only, and with reference to the accompanying drawings wherein:

Figure 1 is a block diagram showing a structure of an embodiment according to the present invention in an application to a word processor;

Figure 2 is a diagram illustrating a calendar and a schedule displayed on an LCD screen;

Figure 3 is an enlarged diagram illustrating a keyboard;

Figures 4 and 5 are flow charts illustrating processing steps of the embodiment.

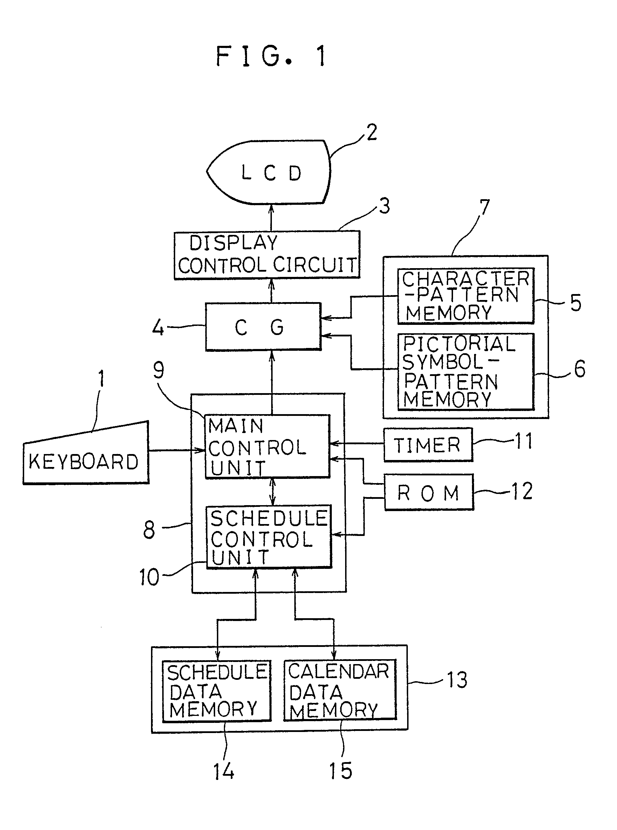

Fig. 1 is a block diagram showing a structure of an embodiment according to the present invention in an application to a word processor.

In Fig. 1, reference numeral 1 denotes a keyboard having keys for letters of the alphabet/the Japanese alphabet (kana), for inputting various information, and reference numeral 2 denotes an LCD (liquid crystal display) for displaying a calendar and a schedule as in the present invention or displaying a sentence, some processing result or the like. Other display device such as a CRT display or an EL display may be substituted for the LCD 2. Reference numeral 3 denotes a display control circuit for controlling display of the LCD 2.

Reference numeral 4 designates a CG (character generator) having a ROM 7. The ROM 7 includes a character-pattern memory 5 in which various character patterns are stored and a pictorial symbol-pattern memory 6. The CG 4 outputs various character patterns and pictorial symbol patterns corresponding to predetermined codes. The ROM 7 may be an external storage device such as a floppy disc. In such a case, user can make and store a new character pattern and a pictorial symbol pattern as a registered additional code for use in future.

A CPU 8 includes a main control unit 9 and a schedule control unit 10. The main control unit 9 controls the whole word processing function such as a conversion between "kana" and Chinese character and input/output operation. The schedule control unit 10 controls an input/output of schedule data and calendar data.

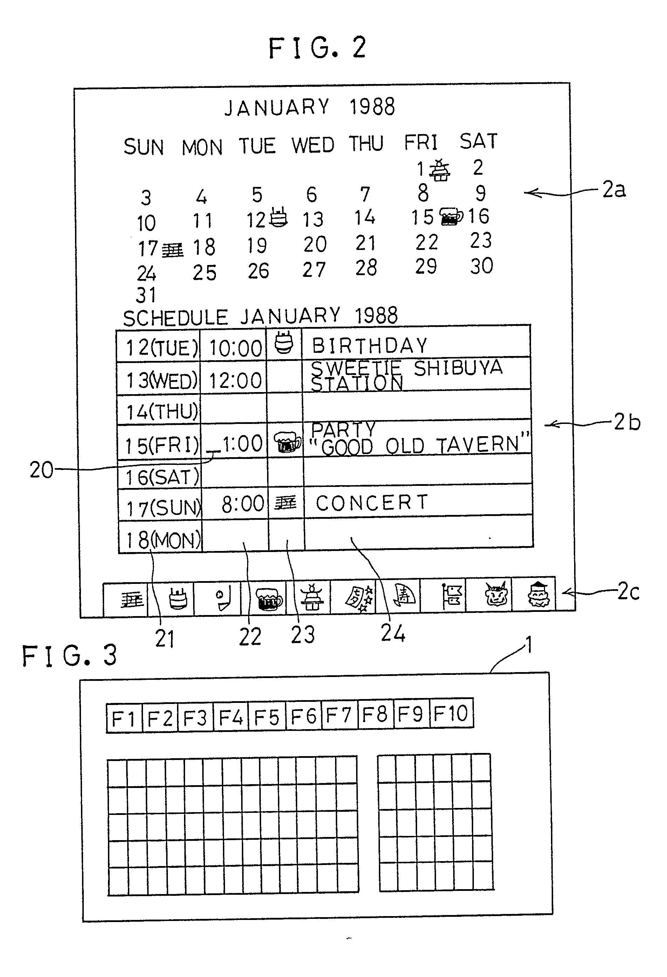

A timer 11 counts a date and a time, and it utilizes an ordinary digital clock or clock function provided for the main control unit 9. A program for operating the main control unit 9 and the schedule control unit 10 is stored in a ROM 12. Also stored in the ROM 12 are a display pattern (described later) for displaying on a screen of the LCD 2 a calendar and a schedule list as shown in Fig. 2, data of a "hiragana (the cursive kana characters)", a "katakana (the square form of kana)", the alphabet, the Chinese characters and pictorial symbols, and a dictionary for "kana" - Chinese character conversion.

A RAM 13 is provided with an internal schedule data memory 14 and calendar data memory 15, and the schedule control unit 10 controls the RAM 13 so that a read/write operation is performed in the schedule data memory 14 and the calendar data memory 15.

The schedule control unit 10 causes the schedule data memory 14 to store schedule data on a schedule of every date and time inputted through the keyboard 1 and to store pictorial symbol data selected from the ROM 12 through the keyboard 1 corresponding to the date.

The calendar data memory 15 stores calendar data on several years of calendar in which the month corresponding to the present point of time is included and which is defined by calculating and counting the date and day of the week of the present point of time with the main control unit 9 and the timer 11 and arranging all the months depending on the calculation and count result on a basis of seven days. Each date in the calendar is provided with a date area for storing pictorial symbol data. Pictorial symbol data stored in the data area in the calendar is the same as that stored with the above-mentioned schedule data of the same date.

As a result, when the calendar is displayed on the screen of the LCD 2, areas of corresponding date in the calendar and the schedule are displayed with like pictorial symbols.

Fig. 2 is a diagram illustrating a calendar and a schedule displayed on a screen of the LCD 2.

Referring to Fig. 2, the screen includes a cursor 20, a date data area 21 in which a date is displayed for making a schedule list, a time data area 22 to which time data is inputted, a pictorial symbol data area 23 to which a pictorial symbol is put and a schedule data area 24 in which explanation on a schedule is inputted. Several pictorial symbols illustrated in a function key area 2c at the bottom line is used in inputting schedule data.

As shown in Fig. 2, when an indication of displaying a calendar and a schedule list is applied through the keyboard 1, the display pattern to be displayed on the screen of the LCD 2 is read from the ROM 12 by the schedule control unit 10. The screen is divided into two, so that a calendar and a schedule are separately displayed in the upper part 2a and the lower part 2b of the screen of the LCD 2. Areas of corresponding date in the calendar and the schedule list are displayed with like pictorial symbols.

A specified schedule and pictorial symbol are inputted after the display as described above by vertically moving the cursor 20 to select a date to which the schedule is to be inputted.

The schedule list is scrolled on the screen independent of the calendar in accord with the movement of the cursor 20. When the schedule list is scrolled, the schedule control unit 10 cause the schedule data memory 14 to put out a schedule one after another. When the schedule list is scrolled to reach a month before or after the present point of time, the schedule control unit 10 cause the calendar data memory 15 to put out a calendar of a month before or a month after the present point of time onto the screen.

Input of pictorial symbol data is carried out by referring to pictorial symbols displayed in the function key area 2c, selecting an arbitrary one and manipulating function keys F1 to F10 corresponding to the respective pictorial symbols as shown in an enlarged diagram of Fig. 3. Although only ten symbols are illustrated within the function key area 2c, it is possible that the main control unit 9 causes the ROM 12 to put out next ten symbols onto the screen by operating a conversion key (not shown) of the keyboard 1.

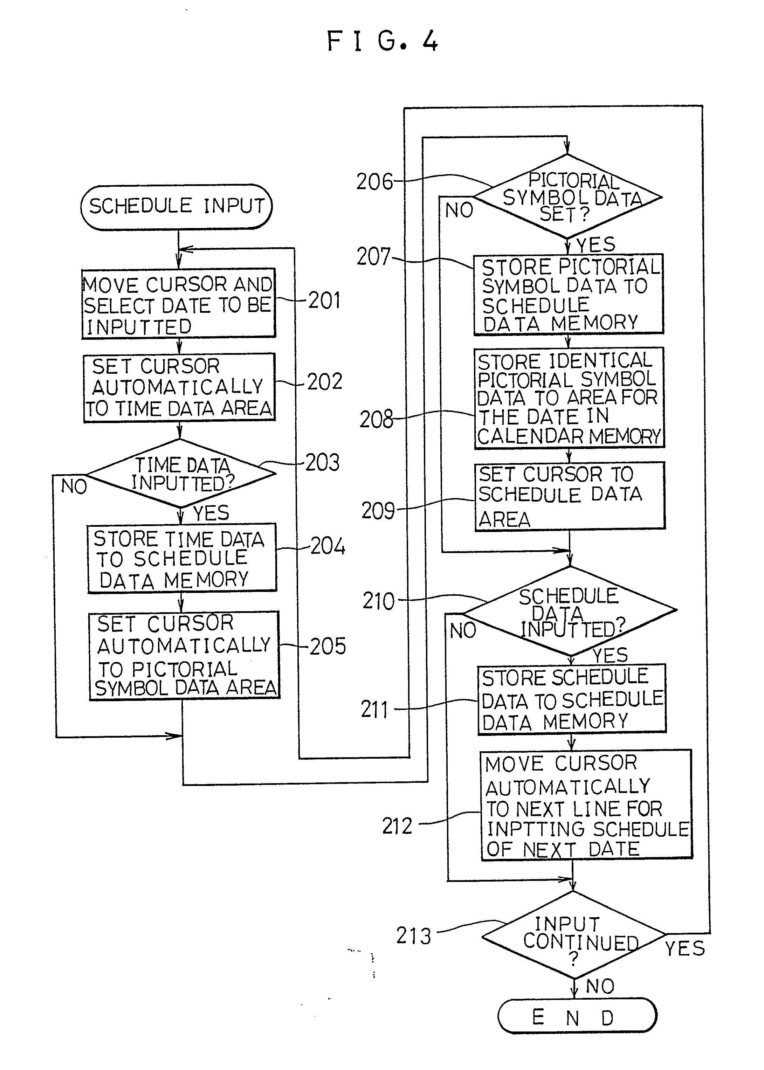

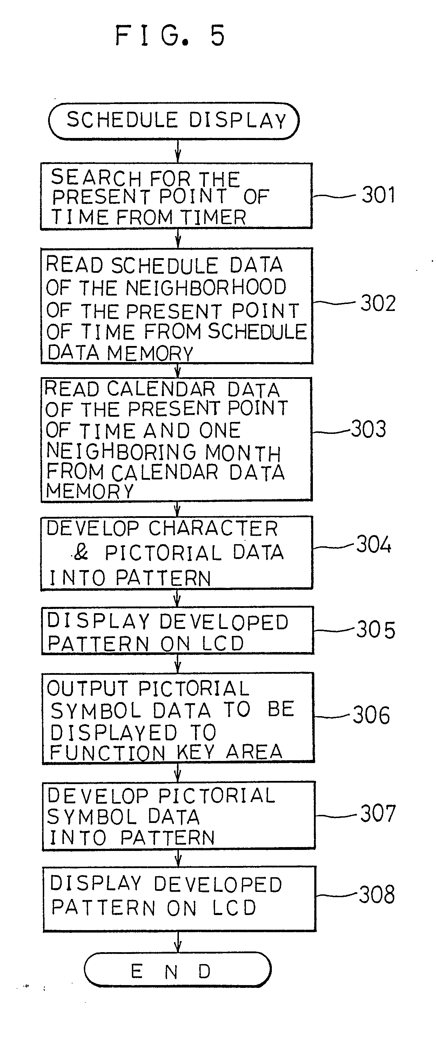

An operation of the embodiment having a construction as stated above will be described with reference to flow charts in Figs. 4 and 5.

Fig. 4 is a flow chart illustrating processing steps in inputting a schedule.

In inputting a schedule, after the display of the screen shown in Fig. 2, the cursor 20 is vertically moved to select a date to which a schedule is to be inputted (Step 201).

After the selection of the date to be inputted, the cursor 20 is automatically set to the time data area 22 (Step 202), and the main control unit 9 judges whether a time, or time date, has been inputted or not (Step 203).

In the case that the time data has been inputted, the main control unit 9 makes the schedule control unit 10 cause the schedule data memory 14 to store the time data (Step 204), makes the cursor 20 automatically move to the pictorial data area 23 (Step 205) and judges whether the next pictorial symbol data has been set or not (Step 206).

At Step 203, in the case that the time data has not been inputted, the main control unit 9 directly judges whether the next pictorial symbol data has been inputted or not (Step 206).

At Step 206, when a pictorial symbol has been set by selecting operation of the function keys F1 to F10, the main control unit 9 makes the schedule control unit 10 cause the schedule data memory 14 to store the pictorial symbol data together with the corresponding date (Step 207), makes the calendar data memory 15 store the same pictorial symbol data to the area corresponding to the date (Step 208), makes the cursor 20 automatically move to the schedule data area 24 (Step 209) and judges whether the schedule data has been inputted or not (Step 210).

At Step 206, when the pictorial symbol has not been set, the main control unit 9 directly judges whether the next schedule data has been inputted or not (Step 210).

At Step 210, the schedule has been inputted to the schedule data area 24, the main control unit 9 makes the schedule control unit 10 cause the schedule data memory 14 to store the schedule as schedule data (Step 211), makes the cursor 20 automatically move to a schedule line of the next date (Step 212) and judges whether the keyboard 1 applies an instruction to continue an input (213).

At Step 210, when the schedule has not been inputted to the schedule data area 24, the main control unit 9 directly judges whether the keyboard 1 applies an instruction to continue an input.

At Step 213, when the instruction to continue the input has been applied, the same procedure is repeated from Step 201, and when not, the process is completed.

Fig. 5 is a flow chart illustrating processing steps in displaying a calendar and a schedule.

When an instruction to display a schedule is applied by the keyboard 1, the main control unit 9 searches for a date and a time of the present point of time from the timer 11 and apply them to the schedule control unit 10 (Step 301).

After that, the schedule control unit 10 read schedule data of the neighborhood of the date corresponding to the present point of time from the schedule data memory 14 (Step 302), read calendar data corresponding to a month including the date of the present point of time from the calendar data memory 15 (Step 303) and transfer them to the main control unit 9.

Then, in the case that pictorial symbol data has been stored in the date area of the calendar data, the pictorial symbol data is simultaneously read and transferred to the main control unit 9.

The main control unit 9 develops character data and pictorial symbol data on these schedule data and calendar data into a character pattern and a pictorial symbol pattern with the CG 4 (Step 304) and makes the LCD 2 display those developed patterns (Step 305). At the same time, pictorial symbol data to be displayed in the function key area 2c necessary for inputting schedule is read from the ROM 12 and outputted to the CG 4 (Step 306). It is developed into a pictorial symbol pattern by CG 4 (Step 307) and the developed pattern is displayed in the function key area 2c on the screen of the LCD 2 (Step 308). Then, a display screen as shown in Fig. 2 is made.

Accordingly, when the calendar is displayed, the same pictorial symbol as that shown in the schedule is displayed near the date of the calendar.

Thus, by displaying a pictorial symbol near a holiday or a date of some event of the calendar for explanation thereof, the user can instantaneously and assuredly recognize what specified day the day is, and hence is highly impressed because of such a pictorial symbol.

## Claims

1. A device for displaying a calendar with a pictorial symbol, comprising;
input means for inputting or designating a date, schedule, pictorial symbol, calendar display or the like;
calculating means for making a calendar by calculating in which a succession of days including the day are arranged on a basis of seven days when a date and a calendar display are designated by said input means;
memory means for storing a pictorial symbol having a specified meaning, a schedule on a basis of a day inputted by said input means, and the calendar made by said calculating means; and
display means for displaying a schedule, calendar or the like,
said memory means storing a specified date and a specified pictorial symbol designated by said input means relatively to each other, and
said display means including a device for displaying said specified pictorial symbol near said specified date in the calendar.

2. A device according to claim 1 wherein said calculating means further includes timer means for counting a date and a time and it makes a calendar in which days corresponding to a month and including the day of the present point just counted by said timer means are arranged on a basis of seven days when an instruction to display said calendar is applied through said input means.

3. A device according to claim 1 wherein said input means has the number of keys equivalent to the number of said pictorial symbol.

4. A device according to claim 1 wherein said display means simultaneously displays said schedule and said calendar.

# F I G. 1

# FIG. 2

## JANUARY 1988

| SUN | MON | TUE | WED | THU | FRI | SAT |
|-----|-----|-----|-----|-----|-----|-----|
| | | | | | 1 | 2 |
| 3 | 4 | 5 | 6 | 7 | 8 | 9 |
| 10 | 11 | 12 | 13 | 14 | 15 | 16 |
| 17 | 18 | 19 | 20 | 21 | 22 | 23 |
| 24 | 25 | 26 | 27 | 28 | 29 | 30 |
| 31 | | | | | | |

— 2a

### SCHEDULE JANUARY 1988

| 12(TUE) | 10:00 | | BIRTHDAY |
|---------|-------|---|----------|
| 13(WED) | 12:00 | | SWEETIE SHIBUYA STATION |
| 14(THU) | | | |
| 15(FRI) | 1:00 | | PARTY "GOOD OLD TAVERN" |
| 16(SAT) | | | |
| 17(SUN) | 8:00 | | CONCERT |
| 18(MON) | | | |

— 2b

20

21   22   23   24

— 2c

# FIG. 3

1

| F1 | F2 | F3 | F4 | F5 | F6 | F7 | F8 | F9 | F10 |
|----|----|----|----|----|----|----|----|----|-----|

# FIG. 4

```
( SCHEDULE INPUT )
        │
        ▼
┌──────────────────────┐
│ MOVE CURSOR AND      │
│ SELECT DATE TO BE    │──201
│ INPUTTED             │
└──────────────────────┘
        │
        ▼
┌──────────────────────┐
│ SET CURSOR           │
│ AUTOMATICALLY        │──202
│ TO TIME DATA AREA    │
└──────────────────────┘
        │
        ▼
      ╱ TIME DATA ╲
NO ◄─◄  INPUTTED?  ╲──203
      ╲          ╱
        ▼ YES
┌──────────────────────┐
│ STORE TIME DATA      │
│ TO SCHEDULE          │──204
│ DATA MEMORY          │
└──────────────────────┘
        │
        ▼
┌──────────────────────┐
│ SET CURSOR           │
│ AUTOMATICALLY        │──205
│ TO PICTORIAL         │
│ SYMBOL DATA AREA     │
└──────────────────────┘
```

```
206──      ╱ PICTORIAL ╲
          ╱ SYMBOL DATA ╲
   NO ◄──◄    SET?      ╱
          ╲          ╱
              ▼ YES
207──┌──────────────────────┐
     │ STORE PICTORIAL      │
     │ SYMBOL DATA TO       │
     │ SCHEDULE             │
     │ DATA MEMORY          │
     └──────────────────────┘
              │
              ▼
208──┌──────────────────────┐
     │ STORE IDENTICAL      │
     │ PICTORIAL SYMBOL     │
     │ DATA TO AREA FOR     │
     │ THE DATE IN          │
     │ CALENDAR MEMORY      │
     └──────────────────────┘
              │
              ▼
209──┌──────────────────────┐
     │ SET CURSOR TO        │
     │ SCHEDULE DATA        │
     │ AREA                 │
     └──────────────────────┘
              │
              ▼
210──      ╱ SCHEDULE ╲
          ╱   DATA     ╲
   NO ◄──◄  INPUTTED?  ╱
          ╲          ╱
              ▼ YES
211──┌──────────────────────┐
     │ STORE SCHEDULE       │
     │ DATA TO SCHEDULE     │
     │ DATA MEMORY          │
     └──────────────────────┘
              │
              ▼
212──┌──────────────────────┐
     │ MOVE CURSOR          │
     │ AUTOMATICALLY        │
     │ TO NEXT LINE FOR     │
     │ INPTTING SCHEDULE    │
     │ OF NEXT DATE         │
     └──────────────────────┘
              │
              ▼
213──      ╱ INPUT ╲
          ╱ CONTINUED ╲──── YES
          ╲    ?     ╱
              ▼ NO
          ( E N D )
```

# FIG. 5

```
( SCHEDULE DISPLAY )
          │
┌──────────────────────┐
│ SEARCH FOR THE       │
│ PRESENT POINT  OF    │──── 301
│ TIME FROM TIMER      │
└──────────────────────┘
          │
┌──────────────────────┐
│ READ SCHEDULE DATA   │
│ OF THE NEIGHBORHOOD  │
│ OF  THE PRESENT POINT│──── 302
│ OF TIME FROM SCHEDULE│
│ DATA MEMORY          │
└──────────────────────┘
          │
┌──────────────────────┐
│ READ CALENDAR  DATA  │
│ OF THE PRESENT POINT │
│ OF TIME AND ONE      │──── 303
│ NEIGHBORING MONTH    │
│ FROM CALENDAR DATA   │
│ MEMORY               │
└──────────────────────┘
          │
┌──────────────────────┐
│ DEVELOP CHARACTER    │
│   & PICTORIAL DATA   │──── 304
│ INTO PATTERN         │
└──────────────────────┘
          │
┌──────────────────────┐
│ DISPLAY DEVELOPED    │──── 305
│ PATTERN ON LCD       │
└──────────────────────┘
          │
┌──────────────────────┐
│ OUTPUT PICTORIAL     │
│ SYMBOL DATA TO  BE   │──── 306
│ DISPLAYED TO         │
│ FUNCTION KEY AREA    │
└──────────────────────┘
          │
┌──────────────────────┐
│ DEVELOP PICTORIAL    │
│ SYMBOL DATA          │──── 307
│ INTO PATTERN         │
└──────────────────────┘
          │
┌──────────────────────┐
│ DISPLAY DEVELOPED    │──── 308
│ PATTERN ON LCD       │
└──────────────────────┘
          │
      ( E  N  D )
```